# EUROPEAN PATENT SPECIFICATION

(11) **EP 0 402 946 B1**
(45) Date of publication and mention of the grant of the patent: **16.08.1995**
(21) Application number: 90111358.9
(22) Date of filing: 15.06.1990
(51) Int. Cl.: B41M 1/34, C04B 41/85

(54) **Pattern sheet for burning and method of forming burned pattern**
Gemustertes Blatt zum Brennen und Verfahren zur Herstellung eines gebrannten Musters
Feuille avec motif à brûler et procédé de formation de motifs brûlés

(30) Priority: 16.06.1989 JP 154857/89; 17.10.1989 JP 271170/89; 17.10.1989 JP 271171/89
(43) Date of publication of application: 19.12.1990
(73) Proprietor: NITTO DENKO CORPORATION, Osaka (JP)
(72) Inventor: Sakuramoto, Takafumi, Ibaraki-shi, Osaka (JP); Tominaga, Takashi, Ibaraki-shi, Osaka (JP)
(74) Representative: Grünecker, Kinkeldey, Stockmair & Schwanhäusser Anwaltssozietät

(56) References cited:
- EP-A- 208 000
- EP-A- 0 351 794
- EP-A- 0 368 357
- DE-C- 3 630 066

## Description

### BACKGROUND OF THE INVENTION

As production system have been changed recently to so-called multi-grade/small lot production, identification labels in the form of substrate made of sintered ceramics, metals, enamel materials, etc. used so far for the management of final products, semi-products, parts, etc. made of metals or sintered ceramics involve problems of poor adhesion to curved adherend surface due to their rigidity, poor adaptibility of identification labels to a pattern forming in the actual working site.

Accordingly, the present applicants have already filed a patent application regarding a pattern sheet for burning, in which a pattern comprising an ink using a glass powder is applied by a screen printing on a wax binder. The pattern sheet is adhered to an adhere surface upon burning and it has flexibility, easy adaptibility to label forming and the burning product from the sheet is excellent in scratch resistance, heat resistance and chemical resistance.

However, under the multi-grade/small lot production system, the amount of screens to be previously provided is enormous to require much time and labor for preparing them. Moreover, there is a problem that a pattern of the burning product formed by burning treatment causes exudation, probably, because of the vitreous powder used for the sheet or ink, failing to form a clear and sharp pattern. Such exudation causes defective appearance and, in addition, makes the reading impossible or erroneous in the case of identification labels such as having bar code patterns.

### DETAILED DESCRIPTION OF THE INVENTION

The present invention provides a method of forming a burned patterned ceramic sheet comprising the following steps:
forming on a ceramic green sheet prepared by shaping a ceramic powder with a resin binder, a pattern containing a powder of metal or metal compound that is converted into metal oxide upon burning in an oxidizing atmosphere, and then applying a burning treatment in an oxidizing atmosphere under the reaction between the powder of the metal or the metal compound forming the pattern and the ceramic powder of the ceramic green sheet.

More specifically, the present invention provides a method of forming a burned pattern ceramic sheet wherein said metal or said metal compound is at least one element selected from the group consisting of iron, cobalt, chromium, molybdenum, manganese, copper, aluminum, titanium, as well as silicide, nitride, carbide, boride, carbonate, nitrate or sulfate thereof.

The present invention further provides a method for the attachment of identification lables to heat resistance articles, wherein the burned pattern ceramic sheet prepared by the method according to claims 1 or 2 is disposed on the heat resistance article and then heated in an oxidative atmosphere.

Additionally, the present invention provides a method for the attachment of identificaiton lables of heat resistance articles, wherein the ceramic green sheet of claim 1 is provisionally attached to the heat resistance article, a pattern according to claims 1 or 2 is disposed thereof and then heated in an oxidative atmosphere.

According to a preferred embodiment of the present invention the pattern sheet is disposed on the heat resistance article under an oxidative atmosphere while converting the powder of metal or metal compound into a metal oxide.

As the non-vitreous ceramic powder, those adhering to heat resistant adhered through reaction, etc. during burning are used. Accordingly, appropriate kind of ceramic powders may be used depending on the heat resistant adherends. Generally, alumina, zirconia, alumina-silica, calcium oxide, magnesia, etc. may be used. An appropriate grain size of the powder is from 0.1 to 100 um and, in particular, from 0.5 to 20 um.

As the resin binder, those which are heat decomposited to be removable upon burning are used and there is no particular restriction for the kind of them. Generally, hydrocarbon resin, vinylic or styrenic resin, acetal resin, butyral resin, acrylic resin, polyester type resin, urethane type resin, cellulose type resin or rubber resin may be used. The amount of the resin binder used may properly be determined depending on the specific gravity or the grain size of the ceramic powder used together. Generally, it is used in an amount of 5 to 100 parts by weight, particularly, 15 to 50 parts by weight based on 100 parts by weight of the ceramic powder.

The ceramic green sheet can be formed, for example, by mixing sheet-forming components in a ball mill, etc. using a solvent, etc., and spreading the liquid mixture on a supporting substrate such as a separator by an appropriate method, followed by drying. As the spreading method, a doctor blade method is preferred in view of the accuracy for controlling the thickness of the spread layer. It is preferred to apply a sufficient deforming treatment, for example, by using a defoamer so that no bubbles remain in the spread layer. When the ceramic green sheet is formed, appropriate additives such as plasticizer, dispersant or sintering additive may be blended as necessary. The thickness of the ceramic green sheet may be determined properly depending on the purpose of use and it is generally from 10 um to 5 mm.

The pattern is formed by using one or more of a powder of metal or metal compounds that can be converted into an oxide upon burning. As the powder of the metal or metal compound usable herein, there can be mentioned, for example, a metal such as iron, nickel, cobalt, chromium, molybdenum, manganese, copper, aluminum or titanium, as well as silicide, nitride, carbide, boride, carbonate, nitrate or sulfate thereof. The grain size of the powder is from 0.1 to 50 um and, particularly, from 0.2 to 20 um.

The pattern can be: printed pattern, transfer pattern, picture pattern, bar code pattern, etc. Appropriate patterning method may be applied such as maniscripting, direct coating by way of a pattern forming mask auch as screen printing, transfer of pattern disposed on transfer paper, forming by using a printer, etc.

A liquid ink usable in the manuscripting or the coating method can be prepared as a liquid by merely dispersing a metal powder, etc. in a solvent or as a pasty liquid by using a fusible binder together. A thermal fixing ink using the fusible binder can be used advantageously for forming an ink sheet for preparing a pattern by using an appropriate printer such as an X-Y plotter, a wire dot printer or a thermal transfer or impact type printer. The pattern forming method using a printer has a merit capable of forming an appropriate pattern efficiently and at a high accuracy.

As the fusible binder used for the preparation of a thermal fixing ink, there can be mentioned wax or polymer. Example of wax used preferably are paraffin waxes such as paraffin wax, microcrystalline wax, polyethylene wax; natural waxes such as bees wax, carnauba wax and wood wax; ester type wax such as Hoechst wax; higher alcohol waxes such as stearyl alcohol or palmityl alcohol; higher amide wax such as stearoamide, oleoamide, palmityloamide, ester type wax such as butyl stearate, ethyl palmitate, myristyl strearate, etc. As the polymer, both of hydrophilic and hydrophobic polymers can be used and they may be used in combination with wax. Polymers used preferably have a softening point based on the ring-ball method of from 40 to 200 °C. As examples of the hydrophilic polymers, there can be mentioned natural products such as gelatine or its derivative, cellulose derivative, proteins such as casein, polysaccharides such as starch or their derivatives; water soluble polymer such as polyvinyl alcohol, polyvinyl pyrrolidone or acrylamide polymer; and polymer latex such as vinyl latex or urethane latex. As example of hydrophobic polymer used preferably, there can be mentioned polyvinyl butyral, polyvinyl formal, polyethylene, polypropylene, polyamide, ethyl cellulose, cellulose acetate, polystyrene,polyvinyl acetate, polyvinyl chloride, polyvinylidene chloride, vinyl chloride-vinyl acetate copolymer, ethylene-vinyl acetate copolymer, vinyl chloride-vinyl acetatemaleic acid terpolymer and rosin derivative such as ester gum. Various other polymers can also be used (for example as disclosed in U.S. Patent Specification Nos. 3062674, 3142586, 3143388, 3220844, 3287289 and 3411911).

The composition ratio for the metal or metal compound pow der, wax and the polymer in the thermal fixing ink may properly be determined. Generally, 3 to 1000 parts by weight of a fusible binder, particularly, 3 to 500 parts of wax and 0 to 500 parts of polymer are used based on 100 parts of the total amount of the metal or metal compound powder. The thermal fixing ink can be prepared by properly mixing them, for example, by using a solvent. An appropriate additive such as a softener may be added to the thermal fixing ink. As the softener, there can be used, usually, vegetable oils such as castor oil, linseed oil, olieve oil; animal oils such as a whale oil and other mineral oils.

The ink sheet for applying to a printer, etc. may be formed by retaining a thermal fixing ink on a supporting substrate by means of coating or impregnation. As the supporting substrate, there can be used, for example, paper such as common paper, capacitor paper, laminate paper or coating paper; a resin film such as made of polyethylene, polypropylene, polyester, polystyrene and polyimide; or paper-film composite member, metal sheet such as aluminum foil and cloth such as made of nylon or polyester fibers. For the ink sheet for application to a thermal transfer printer, it is desirable to use a supporting substrate of excellent heat resistance, dimensional stability and surface smoothness.

Supporting substrate which are not softened or plasticized at a heating temperature for a heat source such as a thermal head, have a heat resistance or a dimensional stability capable of possessing a toughness as the support and have a surface smoothness as the support and have a surface smoothness not hindering the transfer of the thermal fixing ink are preferably used.

For the surface smoothness, those having a smoothness of not less than 100 sec, particularly, not less than 300 sec as determined by a Beck Tester according to JIS P 8119 are preferred in view of the transfer ratio or the image reproducibility. An appropriate thickness of the supporting substrate is usually not greater than about 100 um and, particularly, from 2 to 50 um.

There is no particular restriction for the method of retaining the thermal fixing ink on the supporting substrate but any known method is applicable. As an example, there can be mentioned a method of coating a liquid prepared by dissolving or dispersing a thermal fixing ink into an appropriate solvent on a supporting substrate. In this instance, there may be used, as an appropriate solvent, for example, toluene, methyl ethyl ketone, methyl isobutyl ketone, ethyl acetate, butyl acetate, methanol, ethanol, isopropanol, solvent naphtha, hexane and heptane. Coating may be applied by using an appropriate coating machine such as a reverse roll coater, extrusion coater, gravure coater or wire bar. In the case of disposing the thermal fixing ink as a coating layer on the supporting substrate, appropriate thickness is not greater than 100 um, particularly, from 5 to 50 um. The surface, of the supporting substrate on the side not disposed with the coating layer of the thermal fixing ink may be constituted optionally and utilized properly.

The ink sheet is cut into an appropriate width into a form of a ribbon such as a thermal-transfer ribbon, pressure-transfer ribbon or press-printing ribbon, which may be utilized for practical use in a form applicable to various kind of printers, for example, as an ink ribbon cartridge contained in a casting, as well as the ribbon may be used as it is for the practical application.

A ceramic green sheet or burned pattern sheet to be adhered provisionally to the heat resistant adherend may be appended with an adhesive layer, if necessary, for increasing the adhesion to the adherend. The adhesive layer is so formed that it is burnt out upon burning. Accordingly, any adhesive having an adhesion capable of provisional adherence to the adherend and burnt out, for example, by heat decomposition at a temperature lower than the burning temperature may be used. Generally, rubber type adhesive, acrylic adhesive or vinyl alkyl ether type adhesive is used. Among all, there may be used a rubber type adhesive comprising natural rubber (synthetic-natural rubber), polymer such as butyl rubber, polyisoprene rubber, stylene-butadiene rubber, stylene-isoprene-stylene block copolymer rubber, stylene-butadiene-stylene block copolymer rubber alone or those comprising 100 parts by weight of the above-mentioned polymer, blended with 10 to 300 parts by weight of a tackifier resin such as petroleum resin, terpene resin, rosin resin, xylene resin, or cumaron indene resin, as well as blending agent such as softener, aging inhibitor, colorant and filler of acrylic type adhesives mainly comprising a polymer of acrylic acid or methacrylic acid alkyl ester. The adhesive layer is disposed, for example, by a method of transferring the adhesive layer disposed on a separator or a method of coating an adhesive on a ceramic green sheet, etc. The thickness of the adhesive layer may properly be determined depending on the purpose of used and usually it is from 1 to 200 um. It is desirable that the separator is appended to the exposed surface of the adhesive layer for improving the handrability.

Further, non-vitreous ceramic powder may be mixed with the adhesives. As the non-vitreous ceramic powder to be mixed, there can be mentioned those powders described above for the ceramic sheet. In the case of using the non-vitreous ceramic powder, it is preferred that the same kind of the powder as that used for the ceramic sheet is preferred. For instance, in the case of using an aluminum powder for the ceramic powder, an aluminum type powder may also be used preferably for adhesive. The non-vitreous ceramic powder may be mixed, for example, by mixing the sheet-forming components in a ball mill by using a solvent, etc.

The amount of the non-vitreous ceramic powder mixed may properly be determined depending on the specific gravity or the grain size of the ceramic powder. Generally, it is from 10 to 900 parts by weight, preferably, from 60 to 400 parts by weight based on 100 parts by weight of the adhesives. For the provisional adhesion of the ceramic green sheet or the burned pattern sheet to a heat resistant adherend, an automatic bonding system using a robot, etc. may be employed.

The burned pattern sheet to be adhered provisionally to the heat resistant adherend is burned in an oxidative atmosphere. This enables a powder of metal or metal compound forming the pattern to be fixed to the burned product of the ceramic sheet while being converted into a metal oxide upon burning and securing the ceramic green sheet to the heat resistant adherend. Burning may be conducted at an appropriate heating temperature depending on the temperature of forming the oxide from metal powder, etc. that form the pattern.

The method of forming the burned pattern described above is preferably applicable to the attachment of identification labels comprising bar codes, etc. to heat resistant adherends such as burned ceramics or other pyrolytic bricks, burning tables heat resistant metals, etc. In a case where the heat resistant adherend comprises non-burned ceramic molding products, burning for the burned pattern sheet and the burning or heat treatment to the adherend may be conducted simultaneously.

### EXAMPLE

### Example 1

A liquid mixture prepared by uniformly mixing 80 parts (parts by weight here and hereinafter) of an alumina powder with an average grain size of 2 um, 20 parts of a talc powder with an average grain size of 3 um, 20 parts of polyisobutylene methacrylate, 2 parts of dibutyl phthalate and one part of stearic acid in a ball mill by using 45 parts of toluene was soread on a separator using a doctor blade method and dried to form a ceramic green sheet with a thickness of 60 um, and an adhesive layer of 15 um thickness comprising an acrylic adhesive was appended to the surface thereof and the layer was covered to protect by a separator.

Then, a slurry-like liquid ink prepared by uniformly mixing 20 parts of a nickel powder with an average grain size of 5 um and 10 parts of a polyisobutyl methacrylate in a roll mill by using 20 parts of toluene was coated and printed on the exposed surface of the ceramic green sheet by way of a pattern mask, and dried to form a bar code pattern, thereby forming a pattern sheet for burning.

### Example 2

A coating solution of a thermal fixing ink prepared by uniformly mixing 20 parts of a nickel powder with an average grain size of 1 um, 5 parts of paraffin and 5 parts of polyisobutyl methacrylate by using 20 parts of toluene in a roll mill was coated on a 5 um polyester film such that the thickness after drying was about 20 um by using a coating machine and then dried to prepare an ink sheet.

Then, the ink sheet was cut into a predetermined width of a ribbon, witch was contained in a casing as an ink ribbon cartridge and then a bar code pattern was printed on an exposed surface of a ceramic green sheet obtained in Example 1 by way of a usual thermotransfer printer by using the cartridge to obtain a pattern sheet for burning.

Then, the pattern sheet for burning was provisionally ad hered to a refractory alumina plate (80% alumina, 20% silica) to apply burning.

As described above, a burned pattern firmly adhered to the refractory alumina plate was obtained. The bar code pattern was green and clear with no exudation.

### Example 3

A bar code pattern comprising a thermal fixing ink was printed on a transfer paper in accordance with Example 2, to obtain a pattern sheet.

Then, the same ceramic green sheet as in Example 1 was provisionally adhered to a refractory alumina plate by way of into adhesive layer, the bar code pattern in the pattern sheet was transferred to the ceramic green sheet by way of a hot roll into a pattern sheet for burning, which was burned at 1550°C for one hour (in air).

As described above, a burned pattern firmly adhered to the refractory alumina plate was obtained. The bar code pattern was green and clear with no exudation.

### Example 4

A liquid mixture prepared by uniformly mixing 96 parts of an alumina powder with an average grain size of 2 um, 2 parts of talc with an average grain size of 2 um, 2 parts of kaolin powder with an average grain size of 0.4 um, 7 parts of polyvinyl butyral and 3 parts of dibutyl phthalate in a ball mill using 50 parts of toluene was spread on a separator by means of a doctor blade method and then dried to form a ceramic green sheet of 700 um thickness. Then, a slurry-like liquid ink prepared by uniformly mixing 20 parts by weight of a nickel powder with an average grain size of 3 um and 10 parts of polyisobutyl methacrylate in a roll mill by using 20 parts of toluene was coated and printed by way of a pattern mask on one side of the thus formed ceramic green sheet, which was dried to formed a pattern sheet having a bar code pattern.

Then, the pattern sheet was heated at a rate of 2 °C/min and burnt at 1550 °C for 2 hours (in air). Organic ingredients such as polyvinyl butyral were burnt out by burning.

As described above, a burning pattern having clear green-blue bar code with no exudation firmly fixed on an alumina sintered sheet was obtained.

### Example 5

A burned pattern was formed in accordance with Example 4 except for forming an adhesive layer of 10 um thickness comprising an acrylic adhesive on one surface or polybutyl metacrylate film of 40 um thickness, printing and drying a bar code pattern by way of a pattern mask on the other surface of the film to form a pattern film, which was adhered to a ceramic green sheet by way of an adhesive layer to form a pattern sheet. Organic ingredients such as polybutyl methacrylate film were burnt out by burning.

With the procedure described above, a burned pattern having clear green-blue bar code pattern with no exudation firmly fixed to the alumina burned sheet was obtained.

### Example 6

A burned pattern was prepared in the same procedures as those in Example 1 except that an adhesive layer of 20 um thickness comprising 100 parts by weight of an acrylic adhesive in admixture with 100 parts by weight of the ceramic powder used in Example 1 was applied on one surface of the ceramic green sheet and covered to protect by a separator.

With the procedure as described above, a burned pattern firmly adhered to the refractory alumina plate was obtained. The bar code pattern was green and clear with no exudation.

## Claims

1. A method of forming a burned pattern ceramic sheet comprising the following steps:
forming on a ceramic green sheet prepared by shaping a ceramic powder with a resin binder, a pattern containing a powder of metal or metal compound that can be converted into a metal oxide upon burning in an oxidizing atmosphere, and
then applying a burning treatment in an oxidizing atmosphere under the reaction between the powder of the metal or the metal compound forming the pattern and the ceramic powder of the ceramic green sheet.

2. The method of forming a burned pattern ceramic sheet as claimed in claim 1, wherein said metal or said metal compound is at least one element selected from the group consisting of iron, cobalt, chromium, molybdenum, manganese, copper, aluminum, titanium, as well as silicide, nitride, carbide, boride, carbonate, nitrate and sulfate thereof.

3. Method for the attachment of identification labels to heat resistant articles, wherein the burned pattern ceramic prepared by the method according to claims 1 or 2 is disposed on the heat resistant article and then heated in an oxidative atmosphere.

4. Method for the attachment of identification labels to heat resistant articles, wherein the ceramic green sheet of claim 1 is provisionally attached to the heat resistanct article, a pattern according to claims 1 or 2 is disposed thereover and then heated in an oxidative atmosphere.

5. Method according to claim 3, wherein the pattern sheet is disposed on the heat-resistant article under an oxidative atmosphere while converting the powder of metal or metal compound into a metal oxide.

## Patentansprüche

1. Verfahren zur Herstellung eines gebrannten keramischen Muster-bzw. Dekorbogens bzw. -blatts (burned pattern ceramic sheet) umfassend die folgenden Schritte:
Bilden auf einem keramischen Grünbogen bzw. -blatt, welcher(s) durch das Formen des keramischen Pulvers mit einem Harzbindemittel hergestellt ist, ein Muster bzw. Dekor, enthaltend ein Pulver eines Metalls oder einer Metallverbindung, die beim Brennen in einer oxidierenden Atmosphäre in ein Metalloxid umgewandelt werden kann, und
anschließend Durchführen einer Wärmebehandlung in einer oxidierenden Atmosphäre während der Reaktion zwischen dem Pulver aus dem Metall oder der Metallverbindung, welches das Muster bildet und dem keramischem Pulver des keramischen Grünbogens bzw. - blattes.

2. Verfahren zur Herstellung eines gebrannten keramischen Muster-bzw. Dekorbogens nach Anspruch 1, wobei das Metall oder die Metallverbindung wenigstens ein Element, gewählt aus der Gruppe bestehend aus Eisen, Kobalt, Chrom, Molybdän, Mangan, Kupfer, Aluminium, Titan, wie auch deren Silizide, Nitrite, Karbide, Boride, Carbonate, Nitrate und Sulfate ist.

3. Verfahren zur Befestigung von Identifikationsetiketten (identification label) auf wärmebeständigen Erzeugnissen, wobei das gebrannte keramische Muster bzw. das Dekor, welches durch das Verfahren gemäß Anspruch 1 oder 2 hergestellt ist, auf dem wärmebeständigen Erzeugnis angeordnet wird und anschließend in einer oxidierenden Atmosphäre erwärmt wird.

4. Verfahren zur Befestigung von Identifikationsetiketten auf wärmebeständigen Erzeugnissen, wobei der keramische Grünbogen bzw. das -blatt nach Anspruch 1 provisorisch an dem wärmebeständigen Erzeugnis befestigt wird, ein Muster bzw. Dekorbogen gemäß Anspruch 1 oder 2 darüber angeordnet wird und diese anschließend in einer oxidierenden Atmosphäre erwärmt wird.

5. Verfahren nach Anspruch 3, wobei das Muster bzw. der Dekorbogen auf dem wärmebeständigen Erzeugnis in einer oxidierenden Atmosphäre angeordnet wird, während das Pulver eines Metalls oder einer Metallverbindung in ein Metalloxid umgewandelt wird.

## Revendications

1. Un procédé pour réaliser une feuille à motif en céramique cuite comportant les étapes suivantes:
la formation sur une feuille en céramique verte, préparée en mettant en forme une poudre de céramique avec un liant de résine, d'un motif renfermant une poudre d'un métal ou d'un composé métallique qui peut être converti en un oxyde métallique après cuisson dans une atmosphère oxydante, et
l'application d'un traitement de cuisson dans une atmosphère oxydante en faisant réagir la poudre du métal ou du composé métallique formant le motif et la poudre de céramique de la feuille de céramique verte.

2. Le procédé pour réaliser une feuille en céramique cuite à motif, tel que revendiqué dans la revendication 1, dans lequel ledit métal ou ledit composé métallique est au moins un élément choisi dans le groupe constitué du fer, du cobalt, du chrome, du molybdène, du manganèse, du cuivre, de l'aluminium, du titane ainsi que des siliciures, des nitrures, des carbures, des borures, des carbonates, des nitrates et des sulfates de ceux-ci.

3. Procédé pour la fixation de marques d'identification sur des articles résistant à la chaleur, dans lequel la céramique cuite à motif, qui est préparée par le procédé selon les revendications 1 ou 2 est disposée sur l'article résistant à la chaleur, et ensuite chauffée dans une atmosphère oxydante.

4. Procédé pour la fixation de marques d'identification sur des articles résistant à la chaleur, dans lequel la feuille en céramique verte de la revendication 1 est provisoirement fixée sur l'article résistant à la chaleur, un motif selon la revendication 1 ou 2 étant disposé sur celui-ci et ensuite chauffé dans une atmosphère oxydante.

5. Procédé selon la revendication 3, dans lequel la feuille à motif est disposée sur l'article résistant à la chaleur dans une atmosphère oxydante de façon à convertir la poudre de métal ou le composé métallique en un oxyde métallique.
